# EUROPÄISCHE PATENTANMELDUNG

(11) **EP 1 201 340 A1**
(43) Veröffentlichungstag der Anmeldung: **02.05.2002**
(21) Anmeldenummer: 01119920.5
(22) Anmeldetag: 17.08.2001
(51) Int. Cl.: B23B 31/00

(54) **Festkörperschmierstoffbeschichtetes Spannsystem für Werkzeugmaschinen**

(30) Priorität: 24.10.2000 DE 10052681
(71) Anmelder: GÜHRING, Jörg, Dr., 72458 Albstadt (DE)
(72) Erfinder:
(74) Vertreter: Winter, Brandl, Fürniss, Hübner, Röss, Kaiser, Polte Partnerschaft

(57) **Zusammenfassung**

Die Erfindung betrifft ein Spannsystem als Trennstelle innerhalb eines Werkzeug- oder Werkstückträgersystems 8 oder als Schnittstelle zwischen einem Werkzeug- oder Werkstückträgersystem 8 und einer Werkzeugmaschine 4, 6, zur lösbaren, kraftschlüssigen Verbindung zweier Spannsystemteile 8, 4. Erfindungsgemäß wird vorgeschlagen, wenigstens eine Fügefläche einer Fügeflächenpaarung 105, 121; 202, 405; 204, 104; 106, 404; 185, 205; 187, 206 bzw. 104, 421 zwischen kraftschlüssig zu verbindenden Komponenten der Spannsystemteile mit einer abriebsfest aufgetragenen Festkörperschmierstoffschicht zu beschichten. Durch diese Festkörperschmierstoffbeschichtung läßt sich zum Einen das Gleitverhalten der reibungsbeanspruchten Fügeflächen der miteinander zu verbindenden Komponenten des Spannsystems wesentlich verbessern. Zum Anderen weisen die zudem einer hohen Flächenpressung unterliegenden Fügeflächen verbesserte Korrosionseigenschaften auf. Diese Eigenschaften gewährleisten die erforderliche Lagegenauigkeit der beiden Spannsystemteile auch im Fall von mit hoher Geschwindigkeit rotierenden Werkzeug- oder Werstückträgersystemen.

## Beschreibung

Die Erfindung betrifft ein Spannsystem für Werkzeugmaschinen, zur lösbaren, kraftschlüssigen Verbindung zweier Spannsystemteile als Trennstelle innerhalb eines modular aufgebauten Werkstück- oder Werkzeugträgersystems oder als Schnittstelle zwischen einem Werkstück- oder Werkzeugträgersystem und einer Werkzeugmaschinenspindel.

Der Einsatz moderner, geregelter Werkzeugmaschinen mit Antriebssystemen für hohe Bearbeitungsgeschwindigkeiten ermöglicht eine wesentliche Steigerung der Produktivität durch eine Verringerung der Bearbeitungszeiten infolge einer Erhöhung der Schnitt- und Vorschubgeschwindigkeiten. Die Antriebstechnik für die Hauptantriebe von Werkzeugmaschinen wird im allgemeinen den Forderungen der Hochgeschwindigkeitsbearbeitung nach hoher Drehzahl, Drehsteifigkeit und Dynamik gerecht. Auch erlauben beispielsweise bei der spanabhebenden Bearbeitung neue Schneidstoffe, wie Oxydkeramik und polykristalliner Diamant, wesentlich höhere Schnittgeschwindigkeiten, so daß diese Werkzeugmaschinenkomponenten eine Hochgeschwindigkeitsbearbeitung, beispielsweise bei Zerspanungsvorgängen mit Schnittgeschwindigkeiten von 500 bis 10.000 Meter pro Minute, zulassen. Die maximal erreichbaren Bearbeitungsgeschwindigkeiten werden aber von den bei diesen hohen Schnittgeschwindigkeiten auf das Werkzeug bzw. Werkstück einwirkenden Kräften und den dabei zu berücksichtigenden Sicherheitsaspekten bestimmt.

Daher werden sowohl an das System Werkzeugmaschinenspindel-Lagerung als auch an das Werkstück- oder Werkzeugträgerspannsystem als eine Schwachstelle im Kraftübertragungsweg von der Werkzeugmaschine zum Werkzeug oder Werkstück hohe Anforderungen gestellt. Insbesondere bei Spannsystemen für rotierende Werkzeuge oder Werkstücke ist daher höchste Präzision geboten, da bei den heute durchaus üblichen Drehzahlen von bis zu 30.000 U/min sehr große Kräfte auftreten und schon geringste Unwuchten die angestrebte Bearbeitungsgenauigkeit zunichte machen können bzw. den geforderten Sicherheitsaspekten nicht gerecht werden. Zu den Anforderungen an ein Werkstück- oder Werkzeugspannsystem zählen neben einer hohen statischen und bei rotierenden Werkzeug- oder Werkstücksystemen einer hohen dynamischen Steifigkeit Hochgeschwindigkeitstauglichkeit sowie eine hohe Wiederholgenauigkeit bei einem automatischen Werkzeug- oder Werkstückwechsel.

Spannsysteme im Sinn der vorliegenden Erfindung zeichnen sich üblicherweise dadurch aus, daß das eine der beiden zu verbindenden Spannsystemteile einen zylindrischen oder konischen Hohlschaft und das andere einen entsprechend gestalteten Aufnahmeabschnitt zur passungsgenauen Aufnahme des Hohlschafts auf. Eine konzentrisch im Aufnahmeabschnitt angeordnete Spanneinrichtung dient zur Verspannung der beiden zu verbindenden Spannsystemteile.

So ist beispielsweise aus der DE 4220873 A1 ein modulares Spannsystem bekannt, das eine Spanneinrichtung in Form einer Klammeranordnung aufweist, mittels der der Hohlschaft des einen Spannsystemteils in den Aufnahmeabschnitt des anderen Spannsystemteils eingezogen wird, wodurch zwischen den Fügeflächen des Hohlschafts und Aufnahmeabschnitts wie auch zwischen Planflächen der beiden zu kuppelnden Spannsystemteile eine hohe Flächenpressung erzeugt wird. Die Klammeranordnung weist im Besonderen einen im Aufnahmeabschnitt einhängbaren Klammerkörper auf, der sich im gefügten Zustand der Spannsystemteile in den Hohlschaft bis nahe an eine Innenschulter hinein erstreckt und eine radiale Ausnehmung hat, in der zwei Spannkörper aufgenommen sind. Die Spannkörper sind mittels eines Stellteils durch einen Radialdurchbruch im Hohlschaft und im Aufnahmeabschnitt gegensinnig in und außer Eingriff mit einer hinterschnittenen Spannschulter des Hohlschaftes zwangsbewegbar.

Ein anderes bekanntes Spannsystem, wie es beispielsweise in der Druckschrift DE 3807140 C2 beschrieben ist, umfaßt eine Spanneinrichtung mit mehreren, gleichmäßig über deren Umfang verteilten, lose angeordneten oder zumindest nicht eindeutig fixierten Spannklauen, die formschlüssig im Aufnahmeabschnitt eingehängt sind und in Anlage mit einer im Hohlschaft ausgebildeten hinterschnittenen Spannschulter gebracht werden.

Des Weiteren offenbart die DE 19753663 A1 ein Spannsystem mit einer Spanneinrichtung in Form einer Spannzange oder Spanngabel, die sich im aneinandergefügten Zustand der beiden Teile in den Hohlschaft des einen Teils erstreckt und zumindest zwei gegensinnig bewegbare Spannkörper sowie eine die Spannkörper antreibende Betätigungseinrichtung aufweist. Die Spannkörper können dabei in und außer Eingriff mit einer hinterschnittenen Spannschulter des Hohlschafts gebracht werden. Die Spannkörper sind als Kopfabschnitte von im wesentlichen parallel zur Längs- bzw. Drehachse des Aufnahmeabschnitts angeordneten, länglichen Spannelementen ausgeführt, deren Fußabschnitte miteinander verbunden sind.

In jüngerer Zeit hat sich zunehmend das Hohlschaftkegel-Spannsystem (HSK-Spannsystem) durchgesetzt, da es den Vorteil bietet, daß im zusammengefügten Zustand der beiden Spannsystemteile die zur Verspannung dienenden Spannelemente, also die Spannkörper oder Spannklauen, je nach Ausführung nicht nur dafür sorgen, daß eine ausreichende axiale Flächenpressung zwischen den Planflächen der beiden zu verbindenden Spannsystemteile erzeugt wird, sondern auch dafür, daß der Hohlschaft eine gewisse radiale Aufweitung erfährt. Dadurch wird die Passungsgenauigkeit zwischen Hohlschaft und Aufnahmeabschnitt sowie die radiale Lagegenauigkeit, d.h. die Axialflucht, der beiden Spannsystemteile verbessert. Passungsgenauigkeit und Lagegenauigkeit sind die Eigenschaften, welche ein Spannsystem im Hinblick auf Stabilität, d.h. statische und dynamische Steifigkeit, gerade bei hohen Bearbeitungsgeschwindigkeiten besitzen muß.

Jedoch hat sich herausgestellt, daß gerade bei den ständig zunehmenden Drehzahlen eine stabile und axial fluchtende Verspannung der beiden zu verbindenden Spannsystemteile immer schwieriger wird. Die Ursache hierfür liegt darin, daß durch die sehr hohen Drehzahlen die Fliehkräfte beträchtlich ansteigen, so daß die Spannkräfte, die für die Fixierung der beiden Spannsystemteile und die Drehmomentübertragung sorgen, abnehmen. Eine Erhöhung der Spannkräfte ist einerseits nur bis zu vorgegebenen Belastungsgrenzen möglich, andererseits wächst mit der im Spannsystem gespeicherten kinetischen Energie das Sicherheitsrisiko. Daher müssen die Fügeflächen des Aufnahmeabschnitts und des Hohlschafts wie auch die Planflächen und Spannflächen im aneinandergefügten Zustand der beiden Spannsystemteile insbesondere für rotierende Werkzeuge mit großer Präzision hergestellt werden, um einen möglichsten genauen Sitz des Hohlschafts im Aufnahmeabschnitt und damit eine stabile Verspannung zu erreichen.

Trotz zahlreicher Maßnahmen, um diesen steigenden Anforderungen gerecht zu werden, beispielsweise wurden bessere Werkstoffe eingesetzt, Einrichtungen zur Überwachung der Bearbeitung und Korrektur der Werkzeugeinstellungen vorgechlagen, und dgl., war dennoch zu beobachten, daß die an ein Spannsystem gestellten hohen Anforderungen gerade bei automatischen Werkzeugwechselsystemen nicht in einer Weise erfüllt werden, daß die angestrebte Lagegenauigkeit der beiden zu verbindenden Spannsystemteile und damit die bei hohen Bearbeitungsgeschwindigkeiten erforderlichen statischen und dynamischen Steifigkeiten erreicht werden.

Die Erfindung hat daher die Aufgabe ein modulares Spannsystem für Werkzeugmaschinen der eingangs erläuterten Bauarten bereitzustellen, das die angestrebten Anforderungen hinsichtlich statischer und dynamischer Steifigkeit erfüllt.

Gelöst wird diese Aufgabe durch das Spannsystem gemäß den Merkmalen des Patentanspruchs 1.

Im Zusammenhang mit gezielten Untersuchungen bezüglich der Ursachen für die vorstehend erläuterten Probleme wurde festgestellt, daß ein Spannsystem, bei dem wenigstens eine der beiden Fügeflächen einer Fügeflächenpaarung zweier für die kraftschlüssige Verbindung der Spannsystemteile verantwortlichen, üblicherweise metallischen Komponenten mit einer abriebsfest aufgetragenen Festkörperschmierstoffschicht beschichtet sind, den Anforderungen gemäß der Aufgabenstellung gerecht wird. Durch die Festkörperschmierstoffbeschichtung läßt sich das Gleitverhalten der reibungsbeanspruchten Fügeflächen der miteinander zu verbindenden Komponenten des Spannsystems wesentlich verbessern. Gleichzeitig weisen die zudem einer hohen Flächenpressung unterliegenden Fügeflächen verbesserte Korrosionseigenschaften auf. Mit der Bezeichnung Fügeflächen sind diejenigen Oberflächen bzw. Oberflächenbereiche beliebiger Komponenten der beiden Spannsystemteile gemeint, die während des Zusammenfügens der beiden Spannsystemteile reibungsbeansprucht aneinander entlang gleiten, bzw. diejenigen Oberflächen bzw. Oberflächenbereiche, die im Spannzustand des Spannsystems unter einer (hohen) Flächenpressung aneinander anliegen. Erfindungsgemäß muß daher nicht der gesamte Oberflächeninhalt derjenigen Komponenten, die die Fügeflächen aufweisen, beschichtet sein. Vielmehr reicht es, wenn nur diejenigen Flächenbereichen beschichtet sind, die im Spannzustand des Spannsystems eine Flächenpressung erfahren, d.h. die tatsächlichen Fügeflächen.

Die festgestellten Verbesserungen beruhen im Besonderen auf den folgenden Beobachtungen bzw. Überlegungen: Es konnte beobachtet werden, daß bei herkömmlichen Hohlschaft-Spannsystemen infolge von Fertigungstoleranzen sowohl für den Aufnahmeabschnitt als auch den Hohlschaft die beiden zu verbindenden Teile insbesondere bei automatischen Werkzeugwechselsystemen oftmals nicht in eine absolut exakte koaxiale Anordnung zueinander gebracht werden können. Verstärkt werden kann diese "Schieflage" zum Einen auch dadurch, daß infolge einer ungleichmäßigen Schmiermittelverteilung, beispielsweise durch ein Abstreifen des auf die Fügeflächen, z.B. die Kegelflächen des Hohlschafts und des Aufnahmeabschnitts, aufgetragenen Schmiermittels bei einer Relativgleitbewegung lokale Schmiermittelkonzentrationen an den Fügeflächen entstehen, die insbesondere im Fall von im Schmiermittel mitgeführten Abriebspartikeln oder sonstigen Verschmutzungen leicht zu einer - wenn auch nur geringfügigen - Abweichung der Mittel- bzw. Drehachsen der miteinander verspannten Bauteile führen kann. Dies gilt sowohl für rotierend als auch stehend eingesetzte Spannsysteme. Zum Anderen sammelt sich bei rotierenden Spannsystemen in Hohlräumen Schmiermittel an, das bereits in kleinen Mengen aufgrund der Tatsache, daß schon minimale Massenkonzentrationen erhebliche Unwuchten verursachen, Schwierigkeiten hinsichtlich der angestrebten Bearbeitungsgenauigkeit bereiten kann.

Die ungleichmäßige Schmiermittelverteilung auf den Fügeflächen zwischen Hohlschaft und Aufnahmeabschnitt bewirkt überdies lokal verschiedene Reibungskoeffizienten bzw. Gleiteigenschaften der Fügeflächen. Daher sind diejenigen Bereiche der Fügeflächen, an denen infolge der ungleichmäßigen Schmiermittelverteilung weniger Schmiermittel vorhanden ist, einer erhöhten Reibung ausgesetzt. Dieser Umstand kann insbesondere bei Spannsystemen rotationssymmetrischer Bauart eine bezüglich der Mittel- oder Drehachse ungleichmäßige Verteilung der auf die beiden Spannsystemteile ausgeübten axialen Spannkraft und daher eine geringfügige axiale Auslenkung der Mittel- bzw. Drehachsen der beiden Spannsystemteile zueinander bewirken. Bei hohen Drehzahlen können daher Taumelbewegungen bzw. Unwuchten entstehen, wodurch ein optimaler Rundlauf des Werkzeugs oder Werkstücks nicht mehr gewährleistet ist. Aber auch bei stehenden Spannsystemen kann ein - wenn auch nur geringfügiger - Werkzeugschneidenversatz die angestrebte Bearbeitungsgenauigkeit zunichte machen.

Wie bereits erwähnt, werden in Spannsystemen die beiden zu verbindenden Spannsystemteile mit Hilfe von Spannelementen miteinander verbunden. Diese sind mit Spannflächen versehen, die einerseits am ersten Spannsystemteil und andererseits am zweiten Spannsystemteil angreifen und die Verspannung bewirken. Die Spannflächen sind an einander gegenüberliegenden Enden der Spannelemente angeordnet, so daß innerhalb der Spannelemente im verspannten Zustand der Schnitt- oder Trennstelle axiale Zugkräfte aufgebaut werden. Treten dabei Abstandsdifferenzen der Spannflächen auf, die abgesehen von den ohnehin vorhandenen Fertigungstoleranzen auch auf einem Verschleiß der Spannflächen infolge ungenügender Schmierung oder auf einem "Materialauftrag" an den Spannflächen durch im Schmiermittel eingeschlossene Verschmutzungen beruhen können, werden beim Verspannen der der Schnitt- oder Trenstelle zugeordneten Teile unterschiedliche Kräfte aufgebaut, die zu Auslenkungen der beiden Mittel- bzw. Drehachsen der miteinander verspannnten Wekrzeugteile führen. Die Fluchtung der miteinander verspannten Spannsystemteile ist also nicht mehr gewährleistet. Darüberhinaus können bei einem Wechsel eines der beiden verspannten Teile zuvor eingestellte Maße nicht mehr eingehalten werden. Diese negativen Auswirkungen zeigen sich insbesondere bei für hohe Drehzahlen konzipierten Werkzeug- oder Werkstückträgersystemen infolge der dabei auftretenden hohen Fliehkräfte.

In Anbetracht dieser durch den Einsatz von Schmiermittel bzw. eines nicht gleichmäßigen Schmiermittelauftrags auf die Fügeflächen hervorgerufenen Nachteile könnte man in Erwägung ziehen, auf den Einsatz von Schmiermittel ganz zu verzichten. In diesem Fall müßte jedoch eine hohe Axialkraft aufgebracht werden, um die bei einer Relativbewegung der Fügeflächen oder Spannflächen der beiden Spannsystemteile auftretenden Reibungskräfte zu überwinden und eine zuverlässige und feste Verspannung sicherzustellen. Zum Anderen würden sich infolge unterschiedlicher Oberflächenrauheiten der Fügeflächen bzw. Spannflächen erst recht eine ungleichmäßige Verteilung der aufgebrachten Axialkraft bezüglich der Mittel- oder Drehachse ergeben.

Darüber hinaus konnten bei derartigen, modular aufgebauten Spannsystemen gerade an den kraftschlüssig gepaarten Fügeflächen. d.h an den Passungflächen aber auch an den Spannflächen der Spannelemente und den entsprechenden Gegenflächen der Spannsystemteile, Korrosionserscheinungen festgestellt werden. Korrosion bedeutet einen Verschleiß der Fügeflächen bzw. Spannflächen und ist daher mit eine der Ursachen für die vorstehend geschilderten Probleme.

Durch die erfindungsgemäße Lösung, wonach wenigstens eine der beiden Fügeflächen einer Fügeflächenpaarung zwischen den für eine kraftschlüssige Verbindung zweier Spannsystemteile verantwortlichen Komponenten mit einer abriebsfest aufgetragenen Festkörperschmierstoffschicht beschichtet ist, läßt sich zum Einen der Reibungskoeffizient und damit der reibungsbedingte Verschleiß der gegeneinander gleitenden Fügeflächen vermindern. Zum Anderen läßt sich mit den besseren Gleiteigenschaften der Reibflächen ein innigerer Kontakt und damit eine stärkere Verspannung der beiden zu verbindenden Spannsystemteile erzielen. Dadurch wird die erforderliche Lagenauigkeit der beiden Spannsystemteile gewährleistet. Zudem gestattet das erfindungsgemäße Spannsystem, gänzlich auf den Einsatz eines zusätzlichen Schmiermittels zu verzichten. Diese vorteilhaftn Eigenschaften tragen bei mit hoher Geschwindigkeit rotierenden Werkzeug- oder Werstückträgersystemen erheblich dazu bei, daß die bislang angetroffenen Unwuchtprobleme infolge einer nicht fluchtenden Anordnung der beiden gefügten Spannsystemteile erst gar nicht mehr auftreten. Das erfindungsgemäße Spannsystem ist insbesondere für automatische Werkzeug- oder Werkstückwechselsysteme von Vorteil, da mit den vorstehend geschilderten vorteilhaften Eigenschaften bestimmte Werkzeugeinstellungen in höherem Maß wiederholbar sind als dies bei herkömmlichen Spannsystemen der Fall war. Das erfindungsgemäße Spannsystem gestattet somit infolge einer Verbesserung der Gleiteigenschaften eine verlustfreiere Umsetzung der axialen Einzugskraft, wodurch eine hohe statische Steifigkeit und bei rotierenden Werkstück-oder Werkzeugträgersystemen zudem eine hohe dynamische Steifigkeit des Spindel-Werkzeug-Systems erhalten wird. Dadurch ergibt sich bei rotierenden Systemen ein optimaler Rundlauf des Werkzeugs, der den Anforderungen an Feinbearbeitungsgenauigkeit gerecht wird.

Darüber hinaus hat sich überraschenderweise herausgestellt, daß die einer hohen Flächenpressung unterliegenden Fügeflächen weniger korrosionsanfällig waren als die herkömmlich mittels eines Schmiermittels, z.B. Fett, Graphit oder Öl, geschmierten Fügeflächen. Zurückzuführen läßt sich diese positive Erscheinung auf die Tatsache, daß ein direkter Metall-Metall-Kontakt zwischen den Fügeflächen, Planflächen oder Spannflächen der üblicherweise metallischen Spannsystemteile vermieden wird und daher keine örtlichen Verschweißungen auftreten können.

Die einer Flächenpressung unterliegenden Fügeflächen der zu verbindenden Spannsystemteile besitzen vorzugsweise Oberflächenbeschichtungen bestehend aus mindestens einer Verbindung aus mindestens einem der Hauptelemente der 6. Gruppe des periodischen Systems einerseits und aus mindestens einem der Nebengruppenelemente der 5. und 6. Gruppe des periodischen Systems andererseits. Als Hauptelemente der 6. Gruppe des periodischen Systems kommen in Frage: 0, S, Se und Te. Als Nebengruppenelemente der 5. und 6. Gruppe des periodischen Systems kommen in Frage V, Nb, Ta, Cr, Mo und W. Typische Vertreter der für die Beschichtung geeigneten Verbindungen sind: MOS₂, NbS₂, TaS₂, WS₂, MoSe₂, NbSe₂, TaSe₂, WSe₂, MoTe₂, NbTe₂, TaTe₂ und WTe₂, oder Mischverbindungen davon. Die Beschichtungsmaterialien sind bekannte Schmier- und Gleitstoffe, welche vorzugsweise nach dem PVD (Physical Vapor Deposition)-System abgeschieden werden. Die Festkörperschmierstoffschicht besteht vorzugsweise aus Molybdändisulfid (MoS₂), das sich ebenfalls nach dem PVD-Verfahren auf die jeweiligen Fügeflächen auftragen läßt. Bei der physikalischen Abscheidung nach dem PVD-Verfahren werden bei relativ tiefen Prozesstemperaturen, unter 550°C durch Kathodenzerstäubung dünne Schichten aufgetragen. Das Verfahren bewirkt keine Deformation an den zu beschichtenden Komponenten, was eine Nachbehandlung erübrigt. Besonders bewährt für die Abscheidung von MOS₂-Schichten und dergleichen bei der Herstellung der erfindungsgemäßen Spannsysteme hat sich eine Anlage vom Typ "Closed Field Unbalanced Magnetron". Damit kann bei tiefem, Gasdruck ein hoher Ionisierungsgrad erzielt werden, was zur Ausbildung von kompakten Schichten mit guter Haftung führt. Auch läßt sich die Schichtzusammenseztung mit diesem mehrfach magnetischen System optimal steuern und kontrollieren. MoS₂, das seit langem als Schmier- und Gleitstoff bekannt ist, ist mit einer Mohs'schen Härte von 1 - 2 ein sehr weicher Stoff und weist einen sehr niedrigen Reibungskoeffizienten auf. Die Schichtdicke liegt vorzugsweise im Bereich von 0,1 - 1,0 µm.

Alternativ dazu kann auch eine Oberflächenbeschichtung der jeweiligen Fügeflächen mittels eines Hartstoff-und Festkörperschmierstoffschichtsystems gemäß den Angaben in der Patentschrift DD 202 898 (VEB Uhrenwerke Ruhla) erfolgen, wodurch zusätzlich zu der durch die Festkörperschmierstoffschicht erzielbaren Verminderung des Reibungskoeffizienten die mit der Hartstoffschicht erreichbare Härte hinzukommt. Als Hartstoffschichtmaterial wird vorzugsweise TiC verwendet.

Alternativ dazu kann auch ein Festkörperschmierstoffschichtsystem bestehend aus einer auf die zu beschichtenden Fügeflächen aufzubringenden Festkörperschmierstoffschicht, vorzugsweise aus MoS₂, und einer auf der Festkörperschmierstoffschicht aufgetragenen Kunststoffschicht, wie z.B. Polytetrafluoräthylen (PTFÄ), aufgetragen werden, wodurch eine sehr schmierwirksame Gleitzone in dem Übergangsbereich der beiden Schichten aufgebaut wird.

Das erfindungsgemäße Spannsystem mit Festkörperschmierstoffbeschichtung kraftschlüssig gepaarter Fügeflächen findet generell Anwendung für Spannsysteme beliebiger Bauart, d.h. sowohl für Spannsysteme zur Verwendung für rotierende als auch für stehende Werkzeug- oder Werkstückträgersysteme. Darüber hinaus kann das erfindungsgemäße Spannsystem als Schnittstelle für die Direktaufnahme in Werkzeugmaschinenspindeln oder als Trennstelle innerhalb eines Werkzeug- oder Werkstückträgersystems Anwendung finden. Bezüglich der konkreten Ausgestaltung derartiger Spannsysteme wird auf die eingangs zitierten und gewürdigten Druckschriften verwiesen.

In den Zeichnungen sind verschiedene Ausführungsbeispiele des erfindungsgemäßen Spannsystems in schematischer Weise dargestellt, wobei
Fig. 1 ein Hohlschaftkegel-Spannsystem als Schnittstelle zwischen einem rotierenden Werkzeug- oder Werkstückträgersystem und einer Werkzeugmaschinenspindel mit automatischer, zentraler Zugstangenspannung zeigt;
Fig. 2 ein Hohlschaftkegel-Spannsystem als Trennstelle zwischen einem stehenden Drehwerkzeug und einem Werkzeugträger, mit automatischer seitlicher Spannung zeigt;
Fig. 3 ein Spannzangen-Spannsystem als Schnittstelle zwischen einem rotierenden Werkzeug- oder Werkstückträgersystem und einer Werkzeugmaschinenspindel, mit manueller seitlicher Spannung zeigt;
Fig. 4 eine High Speed Cutting Precision (HSCP)-Werkzeugaufnahme mit Dehnspanntechnik und Axialspannung zeigt;
Fig. 5a eine schematische Ansicht zur Darstellung der Flächenpressungen auf einen in einem Spannschaft einer Werkzeugmaschinenspindel verspannten Hohlschaftkegel-Paßzapfens mit Plananlage ist; und
Fig. 5b den in Fig. 5a eingekreisten Abschnitt der Fügeflächenpaarung zwischen dem Hohlschaftkegel des Paßzapfens und dem Innenkegel des Aufnahmeabschnitts in einem größeren Maßstab zeigt.

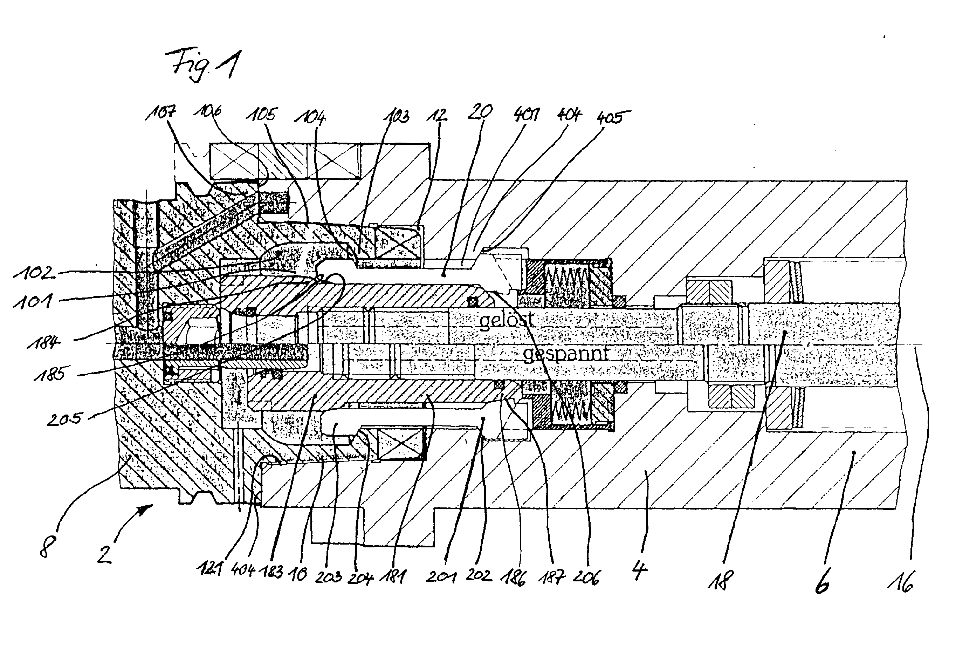

Fig. 1 zeigt das erfindungsgemäße Spannsystem als eine Schnittstelle 2 zwischen einem Spannschaft 4 einer Werkzeugmaschinenspindel 6 und einem Werkzeug- oder Werkstückträger 8. Die in Fig. 1 obere Hälfte zeigt den Lösezustand der Schnittstelle 2, während die untere Hälfte der Fig. 1 deren Spannzustand zeigt. Der Werkzeug- oder Werkstückträger 8 weist einen Paßzapfen 10 auf, der in eine stirnseitig im Spannschaft 4 ausgebildete Ausnehmung 12 eingeführt ist. Der Innendurchmesser der Ausnehmung 12 ist dabei so gewählt, daß der Paßzapfen 10 im wesentlichen spielfrei einsteckbar ist.

Der Paßzapfen 10 ist als ein Hohlschaft ausgebildet und umschließt einen Freiraum 101, der eine umlaufende Ringnut 102 und eine diese begrenzende Ringschulter 103 mit einer Innenkegelfläche 104 aufweist. Diese dient als eine Spannfläche und verläuft unter einem Winkel zur Dreh- oder Mittelachse 16. Der Winkel kann in einem breiten Bereich festgelegt werden. Wesentlich ist, daß die Oberfläche 104 der Ringschulter 103 eine Anlagefläche für die nachstehend zu beschreibenden Spannelemente 20 bildet. Die Mantelfläche 105 des Paßzapfens 10 ist als eine Kegelfläche ausgebildet, die wie aus Fig. 1 ersichtlich im Spannzustand der Schnittstelle 2 kraftschlüssig mit einer entsprechenden Innenkegelfläche 121 der Ausnehmung 12 des Spannschafts 4 gepaart ist.

Der Spannschaft 4 ist damit ebenfalls hohl ausgebildet. In dem an die Ausnehmung 12 anschließenden Innenraum 401 des Spannschafts 4 ist eine in Richtung der Dreh-oder Mittelachse 16 verschiebbare Zugstange 18 angeordnet, die sich im zusammengefügten Zustand des Werkzeug-oder Werkstückträgers 8 und des Spannschafts 4 in den Freiraum 101 des Paßzapfens 10 erstreckt. Auf dem in Fig. 1 linken Endabschnitt der Zugstange 18 sitzt ein Zugkegel 181, dessen in Fig. 1 linker Endabschnitt 183 eine vorzugsweise umlaufend ausgebildete Ringschulter 184 mit einer Anlagefläche 185 für die Spannelemente 20 aufweist, auf die die Spannelemente 20 über an ihren in Fig. 1 linken Endabschnitten 203 vorgesehenen Schrägflächen 205 bei einer Betätigung der Zugstange 18 auflaufen. Ähnlich dazu weist auch der in Fig. 1 rechte Endabschnitt 186 eine Anlagefläche 187 auf, auf die die Spannelemente 20 über an ihren in Fig. 1 rechten Endabschnitten 201 vorgesehenen Schrägflächen 206 auflaufen. Der Innenraum 401 des Spannschafts 4 weist eine Ringschulter 404 mit einer vorzugsweise umlaufenden, Anlagefläche 405 für die Spannelemente 20 auf.

Am Außenumfang des Zugkegels 181 der Spannstange 18 können mehrere über den Umfang verteilte, in Richtung der Dreh- oder Mittelachse 16 verlaufende Aufnahmetaschen ausgebildet sein, in denen die Spannelemente 20 aufgenommen sind. Die Spannelemente 20 sind dabei sowohl in Richtung der Dreh- oder Mittelachse 16 wie auch radial dazu gleitbeweglich in den Aufnahmetaschen angeordnet. Die wie aus Fig. 1 ersichtlich klauen- oder zangenförmig ausgebildeten Spannelemente 20 werden durch nicht gezeigte elastische Rückhalteeinrichtungen, die vorzugsweise als elastische Ringe ausgelegt sind, gegen den Außenumfang des Zugkegels 181 der Zugstange 18 bzw. den Grund der nicht gezeigten Aufnahmetaschen gedrückt.

Bei einer Betätigung der Spannstange 18 aus der in der oberen Hälfte von Fig. 1 gezeigten Stellung in die in der unteren Hälfte von Fig. 1 gezeigten Stellung laufen die Spannelemente 20, die sich - wie aus Fig. 1 ersichtlich - gegen eine Verlagerung nach rechts an einem federvorgespannten Rückhubmechanismus 30 abstützen, an ihren linken Schrägflächen 205 und ihren rechten Schrägflächen 206 auf die linke bzw. rechte Anlagefläche 185, 187 des Zugkegels 181 auf. Dadurch werden die die Spannelemente 20 radial nach außen gedrückt. Dabei laufen die die Spannelemente 20 an ihren linken Spannflächen 204 auf die Anlagefläche 104 der Ringschulter 103 des Paßzapfens 10 und an ihren rechten Spannflächen 202 auf die Anlagefläche 405 der Ringschullter 404 des Innenraums 401 des Spannschafts 4 auf und bewirken dadurch eine Verspannung des Werkzeug- oder Werkstückträgers 8 und des Spannschafts 4. Während der Verspannung erfährt der Paßzapfen 10 eine in Fig. 1 nach rechts wirkende axiale Einzugskraft, wodurch er in die Ausnehmung 401 des Spannschafts 4 eingezogen wird. Zwischen der Kegelmantelfäche 105 des Paßzapfens 10 und der Innenkegelfläche 121 des Spannzapfens 4 entsteht somit eine hohe Flächenpressung. Die Einzugsbewegung des Spannzapfens 10 in den Spannschaft 4 ist beendet, wenn eine die Kegelmantelfäche 105 begrenzende Planfläche 106, die an einer Ringschulter 107 des Werkzeug- oder Werkstückträgers 8 ausgebildet ist, in Anlage an einer am Spannschaft 4 stirnseitig vorgesehenen Planfläche 404 kommt, so daß auch zwischen diesen Planflächen 105, 404 eine hohe Flächenpressung ensteht.

Bezüglich weiterer Merkmale betreffend die Ausgestaltung und Funktionsweise der vorstehend beschriebenen Schnittstelle 2 wird auf die von der Anmelderin der vorliegenden Patentanmeldung im Mai 1991 herausgegebene Broschüre "Bohrmeister", Ausgabe 36/91 verwiesen.

Diese als ein Hohlschaftkegel-Spannsystem ausgeführte Schnittstelle 2 gewährleistet nicht nur eine ausreichende axiale Flächenpressung zwischen den Planflächen 106, 404 sondern auch eine gewisse radiale Aufweitung des den Paßzapfen 10 aufnehmenden Spannschafts 4. Dadurch wird zum Einen eine hohe Passungsgenauigkeit zwischen Paßzapfen 10 und Spannschaft 4 geschaffen, und zum Anderen die radiale Lagegenauigkeit, d.h. die Axialflucht, dieser beiden Komponenten verbessert.

Erfindungsgemäß sind vorzugsweise jeweils wenigstens eine der beiden gepaarten Fügeflächen zwischen den kraftschlüssig zu verbindenden Komponenten des Werkzeug- oder Werkstückträgers 8 und des Spannschafts 4 mit einer abriebsfest aufgetragenen Festkörperschmierstoffschicht beschichtet ist. Als Fügeflächenpaarungen, bei denen wenigstens eine der beiden Fügeflächen mit einer abriebsfest aufgetragenen Festkörperschmierstoffschicht beschichtet werden kann, kommen hierbei in Frage:
die Kegelmantelfläche 105 des Paßzapfens 10 und die Innenkegelfläche 121 der Ausnehmung 12 des Spannschafts 4;
die Spannflächen 204 der Spannelemente 20 und die Anlagefläche 104 an der Ringschulter 103 des Paßzapfens 10;
die Spannflächen 202 der Spannelemente 20 und die Anlagefläche 405 an der Ringschulter 404 im Innenraum 401 des Spannschafts 4;
die Planfläche 106 des Paßzapfens 10 und die Planfläche 404 des Spannschafts 4; und
die Anlageflächen 185 und 187 am Zugkegel 181 und die Schrägflächen 205 und 206 am linken bzw. rechtend Endabschnitt 203 bzw. 201 des Spannelements 20

Die vorstehend genannten Fügeflächen erfahren beim kraftschlüssigen Verspannen von Werkzeug- oder Werkstückträger 8 und Spannschaft 4 eine Relativbewegung und werden auf Reibung beansprucht. Zudem unterliegen sie im verspannten Zustand einer hohen Flächenpressung.

Durch die erfindungsgemäße Festkörperschmierstoffbeschichtung wenigstens einer der beiden Fügeflächen der Fügeflächenpaarungen mit einer abriebsfest aufgetragenen Festkörperschmierstoffschicht wird der Reibungskoeffizient und damit der reibungsbedingte Verschleiß der gegeneinander gleitenden und reibungsbeanspruchten Fügeflächen vermindert. Aufgrund der verbesserten Gleiteigenschaften wird ein innigerer Kontakt und eine stärkere Verspannung zwischen dem Paßzapfen 10 und der Ausnehmung 12 und damit zwischen dem Werkzeug- oder Werkstückträger 8 und dem Spannschaft 4 erzielt. Die erfindungsgemäße Festkörperschmierstoffbeschichtung trägt damit zu einer höheren Lagenauigkeit, d.h. Axialflucht, der beiden Schnittstellenkomponenten bei. Infolge einer gleichmäßigeren Axialkraftverteilung über den Umfang der Kegelmantefläche des Paßzapfens 10 dank niedrigerer Reibungskoeffizienten der Fügeflächen und dementsprechend einer gleichmäßigen Flächenpressung zwischen den Planflächen, wie mittels der Pfeile in Fig. 5a schematisch angedeutet, ist eine äußerst präzise Axialflucht der beiden Schnittstellenkomponenten gewährleistet. Dadurch eignet sich das erfindungsgemäße Spannsystem vorteilhaft für automatische Werkzeug-oder Werkstückwechselsystemen, da mit den vorstehend geschilderten vorteilhaften Eigenschaften bestimmte Werkzeugeinstellungen in hohem Maß wiederholbar sind.

Zudem ist ein Schmiermitteleinsatz, z.B. Öl oder Fett, nicht mehr erforderlich. Gerade bei Werkzeug- oder Werstückträgersystemen, die mit einer hohen Geschwindigkeit rotieren, ist daher die Unwuchtgefahr infolge nicht rotationssymmetrisch verteilter Schmiermittelhäufungen deutlich reduziert.

Das erfindungsgemäße Spannsystem gestattet somit eine hohe statische Steifigkeit, bei rotierenden Werkstück-oder Werkzeugträgersystemen zudem eine hohe dynamische Steifigkeit des Werkzeugmaschinenspindel-Werkzeug/Werkstück-Systems. Dies resultiert bei rotierenden Systemen in einem optimalen Werkezugrundlauf, was den Anforderungen an Feinbearbeitungsgenauigkeit gerecht wird.

Aufgrund der Tatsache, daß ein direkter Metall-Metall-Kontakt zwischen den Fügeflächen, Planflächen und/oder Spannflächen der metallischen Schnittstellenkomponenten vermieden wird, ist ferner die Gefahr örtlicher Verschweißungen erheblich herabgesetzt. Daher zeigt sich an den einer hohen Flächenpressung unterliegenden Fügeflächen bzw. Spannflächen ein deutlich geringes Ausmaß an Korrosionserscheinungen.

Die einer hohen Flächenpressung unterliegenden, reibungsbeanspruchten Fügeflächen der zu verbindenden Spannsystemteile besitzen vorzugsweise Oberflächenbeschichtungen bestehend aus mindestens einer Verbindung aus mindestens einem der Hauptelemente der 6. Gruppe des periodischen Systems einerseits und aus mindestens einem der Nebengruppenelemente der 5. und 6. Gruppe des periodischen Systems andererseits. Als Hauptelemente der 6. Gruppe des periodischen Systems kommen in Frage: 0, S, Se und Te. Als Nebengruppenelemente der 5. und 6. Gruppe des periodischen Systems kommen in Frage V, Nb, Ta, Cr, Mo und W. Typische Vertreter der für die Beschichtung geeigneten Verbindungen sind: MoS₂, NbS₂, TaS₂, WS₂, MoSe₂, NbSe₂, TaSe₂, WSe₂, MoTe₂, NbTe₂, TaTe₂ und WTe₂, oder Mischverbindungen davon. Die Beschichtungsmaterialien sind bekannte Schmier- und Gleitstoffe, welche vorzugsweise nach dem PVD (Physical Vapor Deposition)-System abgeschieden werden. Die Festkörperschmierstoffschicht besteht vorzugsweise aus Molybdändisulfid (MoS₂), das sich ebenfalls nach dem PVD-Verfahren auf die jeweiligen Fügeflächen auftragen läßt. Bei der physikalischen Abscheidung nach dem PVD-Verfahren werden bei relativ tiefen Prozesstemperaturen, unter 550°C, durch Kathodenzerstäubung dünne Schichten aufgetragen. Das Verfahren bewirkt keine Deformation an den zu beschichtenden Komponenten, was eine Nachbehandlung erübrigt. Besonders bewährt für die Abscheidung von MOS₂-Schichten und dergleichen bei der Herstellung der erfindungsgemäßen Spannsysteme hat sich eine Anlage vom Typ "Closed Field Unbalanced Magnetron". Damit kann bei tiefem, Gasdruck ein hoher Ionisierungsgrad erzielt werden, was zur Ausbildung von kompakten Schichten mit guter Haftung führt. Auch läßt sich die Schichtzusammenseztung mit diesem mehrfach magnetischen System optimal steuern und kontrollieren. MoS₂, das seit langem als Schmier- und Gleitstoff bekannt ist, ist mit einer Mohs'schen Härte von 1 - 2 ein sehr weicher Stoff und weist einen sehr niedrigen Reibungskoeffizienten auf.

Die Schichtdicke liegt im Bereich der jeweiligen Toleranzgrenzen für die Oberflächenrauheit der Fügeflächen und vorzugsweise in einem Bereich von 0,1 - 1,0 µm. Fig. 5b zeigt schematisch den in Fig. 5a eingekreisten Abschnitt der Fügeflächenpaarung zwischen dem Hohlschaftkegel eines Paßzapfens 10 und dem Innenkegel eines Aufnahmeabschnitts 4 in einem größeren Maßstab. In dem in Fig. 5b gezeigten Beispiel sind beide Fügeflächen 10a, 4a mit einer Festköperschmierstoffschicht aus z.B. MoS₂ beschichtet, wobei die Schichtdicke etwa im Bereich der Rauhtiefe der Fügeflächen, z.B. bei feingeschliffenen Oberflächen bei etwa 0,4 bis 0,6 µm, liegt.

In dem gezeigten Beispiel sind beide Fügeflächen der Fügeflächenpaarung zwischen den kraftschlüssig zu verbindenden Komponenten 10, 4 des Spannsystems mit einer abriebsfest aufgetragenen Festkörperschmierstoffschicht beschichtet. Jedoch würde die der Erfindung zugrundeliegende Aufgabe auch dann gelöst, wenn nur eine der beiden Fügeflächen einer Fügeflächenpaarung beschichtet wäre.

Alternativ zur vorstehend vorgeschlagenen Festkörperschmierstoffbeschichtung kann eine Oberflächenbeschichtung der jeweiligen Fügeflächen mittels eines Hartstoff-und Festkörperschmierstoffschichtsystems auch gemäß den Angaben in der Patentschrift DD 202 898 (VEB Uhrenwerke Ruhla) erfolgen, wodurch zusätzlich zu der durch die Festkörperschmierstoffschicht erzielbaren Verminderung des Reibungskoeffizienten die mit der Hartstoffschicht erreichbare Härte hinzukommt. Als Hartstoffschichtmaterial wird vorzugsweise TiC verwendet.

Alternativ dazu kann jedoch auch ein Festkörperschmierstoffschichtsystem bestehend aus einer auf die zu beschichtende Fügefläche aufzubringenden Festkörperschmierstoffschicht, vorzugsweise MoS₂, und einer auf der Festkörperschmierstoffschicht aufgetragenen Kunststoffschicht, wie z.B. Polytetrafluorethylen (PTFE), aufgetragen werden, wodurch eine sehr schmierwirksame Gleitzone in dem Übergangsbereich beider Schichten aufgebaut wird.

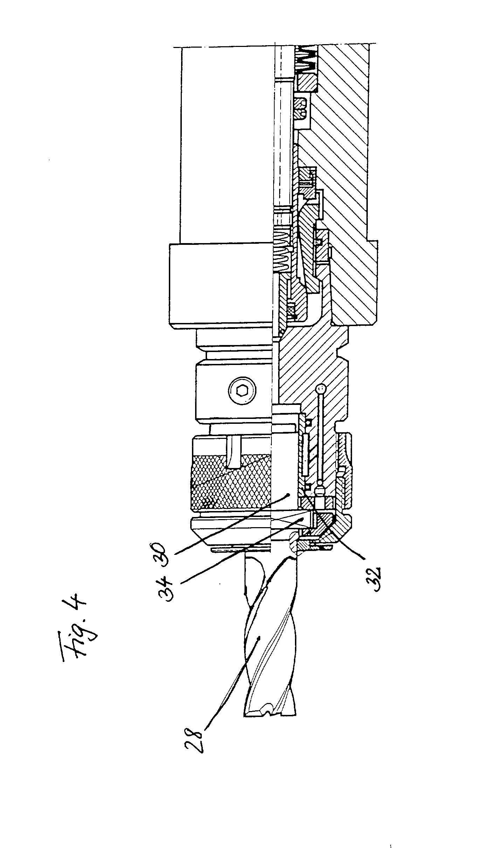

Die Figuren 2 bis 4 zeigen Alternativen zu dem vorstehend erläuterten Schnittstellenspannsystem. Fig. 2 zeigt ein Spannsystem zur Verwendung als Trennstelle zwischen einem im Betrieb stehenden Drehwerkzeug und einem Werkzeugträger, mit automatischer seitlicher Spannung. Dieses Spannsystem entspricht im Aufbau und in der Funktion im wesentlichen dem in Fig. 1 gezeigten Spannsystem. Daher entsprechen auch die festkörperschmierstoffbeschichteten Füge- und Spannflächen im Spannsystem gemäß der Fig. 2 den Füge- und Spannflächen des Spannsystemens gemäß Fig. 1.

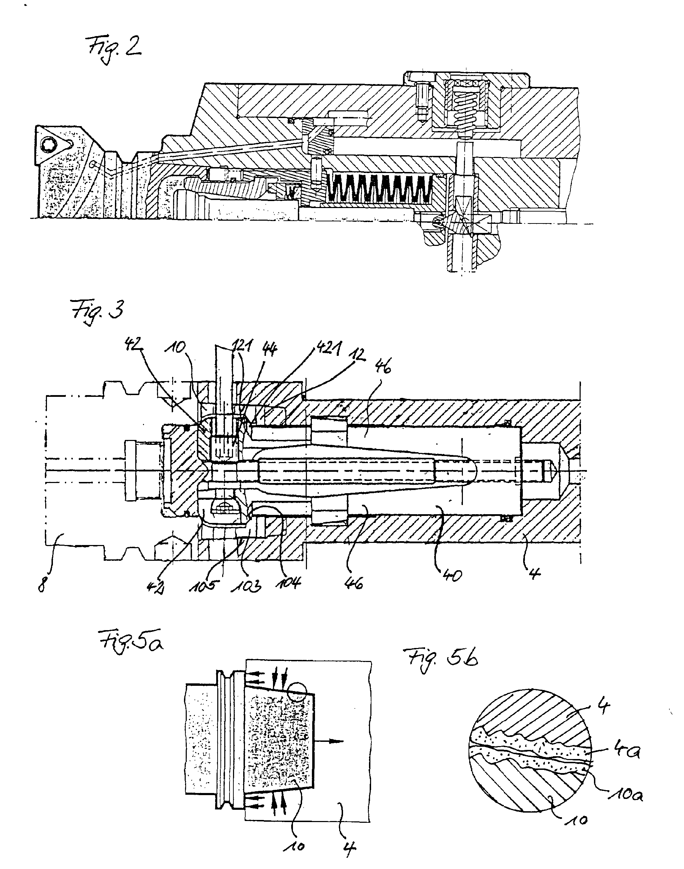

Fig. 3 zeigt ein Spannzangen-Spannsystem als Schnittstelle zwischen einem rotierenden Werkzeug- oder Werkstückträgersystem und einer Werkzeugmaschinenspindel, mit manueller seitlicher Spannung, wie es aus der DE A1 19753663 bekannt ist und bereits eingangs erläutert wurde. Dieses Spannsystem umfaßt eine Spanneinrichtung 40 in Form einer Spannzange oder Spanngabel, die sich im aneinandergefügten Zustand der beiden Spannsystemteile 4, 8 in den als Hohlschaftkegel ausgeführten Paßzapfen 10 des einen Werkzeug- oder Werkstückträgers 8 erstreckt und zumindest zwei gegensinnig bewegbare Spannkörper 42 sowie eine die Spannkörper 42 antreibende Betätigungseinrichtung 44 aufweist. Die Spannkörper 42 können dabei in und außer Eingriff mit einer hinterschnittenen Ringschulter 103 des Paßzapfens 10 gebracht werden. Die Spannkörper 42 sind als Kopfabschnitte von im wesentlichen parallel zur Längs- bzw. Drehachse des Aufnahmeabschnitts angeordneten, länglichen Spannelementen 46 ausgeführt, deren Fußabschnitte z.B. in Form eines Materialgelenks miteinander verbunden sind. Bei diesem Spannsystem sind vorzugsweise die Kegelmantelfläche 105 des Paßzapfens 10 und/oder die Innenkegelfläche 121 in der Ausnehmung 12 des Spannschafts 4 mit einer Festkörperschmierstoffschicht beschichtet. Vorteilhafterweise weisen auch die sich an der Anlagefläche 104 der Ringschulter 103 des Paßzapfens 10 abstützenden Spannflächen 421 an den Kopfabschnitten 42 der Spannelemente 46 und/oder die Anlagefläche 104 der Ringschulter 103 eine Festkörperschmierstoffschicht auf.

Bei der in Fig. 4 gezeigten "High Speed Cutting Precision"-Werkzeugaufnahme (HSCP) mit Dehnspanntechnik und Axialspannung sind vorzugsweise die Mantelfläche des Zylinderschafts 30 des Bohrwerkzeugs 28 und die zylindrischen Innenflächen des Dehnspannfutters 32 mit einer abriebsfest aufgetragenen Festkörperschmierstoffschicht beschichet. Zusätzlich können die am Werkzeugbund 34 stirnseitig vorgesehenen ringförmigen Planflächen beschichtet sein.

In Abwandlungen zu den vorstehend erläuterten Spannsystemen kann alternativ zu einer reinen Festkörperschmierstoffschicht auf die jeweils zu beschichtenden Oberflächen auch ein Hartstoff- und Festkörperschmierstoffschichtsystem entsprechend der Patentschrift DD 202 898 (VEB Uhrenwerke Ruhla) aufgetragen werden. Hierdurch erhält die beschichtete Oberfläche zusätzlich zu der mit der Festkörperschmierstoffschicht erzielbaren Verminderung des Reibungskoeffizienten die mit der Hartstoffschicht erreichbare Härte. Als Hartstoffschichtmaterial kann beispielsweise TiC verwendet werden.

Alternativ dazu kann auch ein Festkörperschmierstoffschichtsystem bestehend aus einer auf die zu beschichtenden Fügeflächen aufzubringenden Festkörperschmierstoffschicht, vorzugsweise aus MoS₂, und einer auf der Festkörperschmierstoffschicht aufgetragenen Kunststoffschicht, wie z.B. PTFÄ, aufgetragen werden, wodurch eine sehr schmierwirksame Gleitzone in dem Übergangsbereich beider Schichten aufgebaut wird.

Darüber hinaus können auch andere geeignete Festkörperschmierstoffschichten bzw. andere geeignete Schichtsysteme auf die zu beschichtenden Fügeflächen aufgetragen werden. Entscheidend ist lediglich, daß die Beschichtung abriebsfest erfolgt und eine Verbesserung der Gleiteigenschaften als Voraussetzung für hohe statische wie auch dynamische Eigenschaften des Spannsystems bewirkt.

## Patentansprüche

1. Spannsystem als Trennstelle innerhalb eines Werkzeug- oder Werkstückträgersystems (8) oder als Schnittstelle zwischen einem Werkzeug- oder Werkstückträgersystem (8) und einer Werkzeugmaschine (4, 6) zur lösbaren, kraftschlüssigen Verbindung zweier Spannsystemteile (8, 4), **dadurch gekennzeichnet, daß**
wenigstens eine Fügefläche einer Fügeflächenpaarung (105, 121; 202, 405; 204, 104; 106, 404; 185, 205; 187, 206; 104, 421) zwischen kraftschlüssig zu verbindenden Komponenten der Spannsystemteile mit einer abriebsfest aufgetragenen Festkörperschmierstoffschicht beschichtet ist.

2. Modulares Spannsystem nach Anspruch 1, **dadurch gekennzeichnet, daß** die wenigstens eine Fügefläche mit einem Hartstoff- und Festkörperschmierstoffschichtsystem beschichtet ist, wobei die Festkörperschmierstoffschicht die äußere Schicht des Hartstoff- und Festkörperschmierstoffschichtsystems bildet.

3. Modulares Spannsystem nach Anspruch 1 oder 2, **dadurch gekennzeichnet, daß** auf die Festkörperschmierstoffschicht eine Kunststoffschicht aufgebracht ist.

4. Modulares Spannsystem nach einem der Ansprüche 1 bis 3, **dadurch gekennzeichnet, daß** die Festkörperschmierstoffschicht aus MoS₂ gebildet ist.

5. Modulares Spannsystem nach einem der Ansprüche 2 bis 4, **dadurch gekennzeichnet, daß** die Hartstoffschicht aus TiC gebildet ist.

6. Modulares Spannsystem nach einem der Ansprüche 3 bis 5, **dadurch gekennzeichnet, daß** die Kunststoffschicht aus PTFE gebildet ist.

7. Modulares Spannsystem nach einem der Ansprüche 1 bis 6, **dadurch gekennzeichnet, daß** die gesamte Schichtdicke innerhalb der Toleranzgrenze für die Oberflächenrauheit der wenigstens einen Fügefläche liegt.

8. Modulares Spannsystem nach Anspruch 7, **dadurch gekennzeichnet, daß** die gesamte Schichtdicke in einem Bereich von 0,1 bis 1,0 µm liegt.
